# EUROPÄISCHE PATENTANMELDUNG

(11) **EP 1 052 817 A2**
(43) Veröffentlichungstag der Anmeldung: **15.11.2000**
(21) Anmeldenummer: 00440128.7
(22) Anmeldetag: 09.05.2000
(51) Int. Cl.: H04L 12/58, G06F 17/60

(54) **Vorrichtung zur automatischen Bearbeitung von eingehender elektronischer Post(=Email)**

(30) Priorität: 14.05.1999 DE 19922300
(71) Anmelder: ALCATEL, 75008 Paris (FR)
(72) Erfinder: Weik, Hartmut, 70195 Stuttgart (DE)
(74) Vertreter: Zinsinger, Norbert

(57) **Zusammenfassung**

Eine Vorrichtung und ein Verfahren zum Empfangen und/oder Weiterleiten von elektronischer Post (= Email) sind dadurch gekennzeichnet, daß bei allen an einer Empfangseinheit (1) ankommenden Email-Nachrichten (4) automatisch entsprechend vorgegebenen Suchkriterien Informationen extrahiert wird, daß abhängig von der extrahierten Information sowie vorgegebenen Zuordnungskriterien eine automatische Zuordnung der ankommenden Email zu mindestens einer von mehreren Adressen erfolgt, und daß die ankommende Email automatisch in einem mit der bzw. den entsprechenden Adresse(n) bezeichneten Speicherbereich (11, 12, 13, 14) abgelegt oder zu der bzw. den Adresse(n) weitergeleitet wird. Dadurch kann die ankommende Email automatisch vorsortiert und entsprechend abgelegt oder an zugeordnete Adressen weitergeleitet werden, ohne daß der Benutzer manuell tätig werden muß oder nachträglich ein Makro die bereits angekommene und in einer Mailbox abgelegte Email bearbeiten läßt.

## Beschreibung

Die Öffnung betrifft ein Verfahren und eine Vorrichtung zum Empfangen und/oder Weiterleiten von elektronischer Post (= Email) mit einer Empfangseinheit, die ankommende Email - Nachrichten empfangen kann.

Aus der JP 100 04 428 A ist eine Vorrichtung zum Empfangen von Email bekannt, bei der eine Empfangseinheit die ankommenden Email - Nachrichten empfängt und in einer Mailbox speichert. Erst danach werden der Titel und die Syntax der empfangenen Email analysiert, wobei eine Charakteristika - und Extrahierungseinheit Stichwörter aus der analysierten ankommenden Email extrahiert. Danach wird die empfangene Email aus der Mailbox entnommen und auf einem Display dargestellt. Der Vorteil dieser Vorgehensweise soll eine effiziente Suche und Informationsanpassung sowie die Möglichkeit zu einer automatischen Klassifizierung von ankommender Email sein.

Nachteilig bei dieser bekannten Lösung ist jedoch, daß die ankommende Email zunächst, wie üblich, in einer Mailbox für "Eingangspost" abgelegt wird, und erst nachträglich eine Analyse der empfangenen Email durch ein Makro oder einen Benutzer vorgenommen wird.

Aufgabe der vorliegenden Erfindung ist es dem gegenüber, das Handling der Email-Kommunikation zu verbessern und insbesondere schneller als bisher möglich wichtige von unwichtigen Nachrichten zu trennen noch bevor die ankommende Email in einer Mailbox abgelegt wird, um die Nachrichtenflut effektiver in den Griff zu bekommen.

Hinsichtlich der Vorrichtung wird diese Aufgabe erfindungsgemäß dadurch gelöst, daß die Empfangseinheit Mittel zum Extrahieren von Information aus der ankommenden Email entsprechend vorgebbaren Suchkriterien und Mittel zum Zuordnen von ankommender Email zu mindestens einer von mehreren Adressen abhängig von der extrahierten Information sowie von einem oder mehreren vorgebbaren Zuordnungskriterien aufweist.

Dadurch kann die ankommende Email automatisch vorsortiert und entsprechend abgelegt oder an zugeordnete Adressen weitergeleitet werden, ohne daß der Benutzer manuell tätig werden muß oder nachträglich ein Makro die bereits angekommene und in einer Mailbox abgelegte Email bearbeiten läßt. Damit werden einerseits alle ankommenden Nachrichten in gleicher Weise behandelt, andererseits ergibt sich ein wesentlicher Zeitgewinn durch das automatisierte Email-Screening im Vorfeld einer Eingangsablage. Durch verschiedene vorgebbare Such- und Zuordnungskriterien können die ankommenden Emails in beliebig veränderbarer, an die jeweiligen Anforderungen anpassbare Weise vorsortiert und so die Datenflut effektiv reduziert werden. Damit wird auch die Effektivität von Teleworkern entscheidend erhöht.

Besonders bevorzugt ist eine Ausführungsform der erfindungsgemäßen Vorrichtung, bei der die Adressen, denen die ankommenden Email zugeordnet wird, als elektronische Ordner eingerichtete Speicherbereiche einer Datenspeichereinheit bezeichnen. Die Ablage in derartigen elektronischen Ordnern macht das Handling der empfangenen Email noch einfacher und übersichtlicher.

Bei einer Weiterbildung dieser Ausführungsform sind Mittel zum Abspeichern der ankommenden Email in dem bzw. den entsprechenden Ordner(n) vorgesehen.

In dem Rahmen der vorliegenden Erfindung fällt auch ein Datenendgerät (= Teminal) zum Anschluß an ein Telekommunikations-Netzwerk mit einer Vorrichtung zum Empfangen von elektronischer Post (= Email) der oben beschriebenen erfindungsgemäßen Art.

Ebenso fällt in den Rahmen der vorliegenden Erfindung ein Router zum Anschluß an ein Telekommunikations-Netzwerk mit einer Vorrichtung zum Empfangen und Weiterleiten von elektronischer Post (= Email) der oben beschriebenen, erfindungsgemäßen Art.

Schließlich fällt in den Rahmen der vorliegenden Erfindung auch ein Verfahren zum Empfangen und/oder Weiterleiten von elektronischer Post (= Email), mit dem die oben beschriebene Erfindungsaufgabe dadurch gelöst wird, daß bei allen an einer Empfangseinheit ankommenden Email-Nachrichten automatisch entsprechend vorgegebenen Suchkriterien Information extrahiert wird, daß abhängig von der extrahierten Information sowie vorgegebenen Zuordnungskriterien eine automatische Zuordnung der ankommenden Email zu mindestens einer von mehreren Andressen erfolgt, und daß die ankommende Email automatisch in einem mit der bzw. den entsprechenden Adresse(n) bezeichneten Speicherbereich abgelegt oder zu der bzw. den Adresse(n) weitergeleitet wird.

Die durch die Such- und Zuordnungskriterien implementierte Filterfunktion sortiert die ankommenden Email-Nachrichten entsprechend der extrahierten Information und ordnet sie entsprechend vorgebbaren Adressen zu, an welche die Email entweder mittels eines Routers weitergeleitet oder wo sie mittels einer Speichereinheit abgespeichert wird. Die automatische Auswertung der ankommenden Email-Nachrichten nach mehreren vorgebbaren Parametern erfolgt objektiv und ohne Zeitverlust durch eine Maschineninstanz, was ein umständliches Durchsuchen und einen Entscheidungsprozeß einer menschlichen Bedienungsperson ersetzt.

Besonders bevorzugt ist eine Variante des erfindungsgemäßen Verfahrens, bei der die Adressen, denen die ankommende Email zugeordnet wird, als elektronische Ordner eingerichtete Speicherbereiche einer Datenspeichereinheit bezeichnen, wodurch eine besonders einfache und übersichtliche Weiterverarbeitung der empfangenen Email ermöglicht wird.

Bei einer weiteren, besonders bevorzugten Variante des erfindungsgemäßen Verfahrens bezieht sich zumindest eines der Such- und/oder der Zuordnungskriterien auf absenderspezifische Daten der ankommenden Email, insbesondere auf den Namen oder die Email-Adresse des Absenders, weil hier in der Regel die für ein Vorsortieren der ankommenden Email wichtigsten Daten vermutet werden können.

Eine vorteilhafte Weiterbildung dieser Verfahrensvariante zeichnet sich dadurch aus, daß die absenderspezifischen Daten mit einer Negativliste (black list) verglichen werden, und daß die ankommende Email bei einem positiven Ergebnis dieses Vergleichs sofort gelöscht oder ohne weitere Bearbeitung auf einer besonderen Adresse, die insbesondere Papierkorbfunktionen ausübt, abgelegt oder zu dieser weitergeleitet wird. Hierdurch können unerwünschte und mutmaßlich unwichtige Nachrichten sofort aus dem allgemeinen Nachrichtenstrom aussortiert werden, so daß eine erheblich geringere Anzahl von ankommenden Emails der eigentlichen Weiterverarbeitung zugeleitet wird.

Umgekehrt ist es bei einer weiteren Verfahrensvariante von Vorteil, daß die absenderspezifischen Daten mit einer Positivliste (white list) verglichen werden, und daß die ankommende Email bei einem positiven Ergebnis dieses Vergleichs in Abhängigkeit der Zuordnungskriterien sofort einer weiteren Bearbeitung zugeführt wird. Dadurch können besonders eilige und wichtige Nachrichten gesondert und bevorzugt behandelt werden.

Nützlich ist es bei einer Weiterbildung dieses Verfahrensvariante, wenn bei positivem Ergebnis des Vergleichs mit der white list eine Sicherungskopie der ankommenden Email parallel zur weiteren Bearbeitung der Email auf einer besonderen Adresse abgelegt oder zu dieser weitergeleitet wird. Falls es bei der (bevorzugten schnellen) Bearbeitung der als besonders wichtig aussortierten Email-Nachricht zu einer Störung kommen sollte, beispielsweise ein versehentliches Löschen der Nachricht, so kann problemlos auf die Sicherungskopie zurückgegriffen werden.

Um dem zuständigen Empfänger bzw. einer verantwortlichen Bedienungsperson den Eingang von ganz besonders wichtigen Nachrichten anzuzeigen, wird bei einer anderen Weiterbildung der obigen Verfahrensvariante bei positivem Ergebnis des Vergleichs mit der white list eine Signalisierungseinrichtung, insbesondere ein optischer und /oder akustischer Signalgeber betätigt.

Eine weitere vorteilhafte Variante des erfindungsgemäßen Verfahrens zeichnet sich dadurch aus, daß sich zumindest eines der Such- und/oder der Zuordnungskriterien auf den Inhalt der ankommenden Email, insbesondere auf ein bestimmtes Stichwort bezieht, und daß bei Auffinden dieses Stichworts in der ankommenden Email entweder die Email direkt oder eine Sicherungskopie derselben auf einer bestimmten Adresse abgelegt oder zu dieser weitergeleitet wird. Damit kann gezielt nach "Reizworten" in der Flut der eingehenden Nachrichten gesucht werden und bei Auffinden eines solchen die entsprechende Nachricht oder eine Kopie derselben direkt an eine bestimme Stelle weitergeleitet werden.

Eine weitere vorteilhafte Variante des erfindungsgemäßen Verfahrens zeichnet sich dadurch aus, daß sich zumindest eines der Suchkriterien auf den Dateninhalt an einer bestimmten Position innerhalb der ankommenden Email, beispielsweise auf die "Anrede", den "Betreff", die "Anlage" oder "cc" bezieht. An diesen bei Email-Nachrichten in der Regel wohldefinierten Positionen befinden sich Daten, die für die weitere Behandlung der Nachricht von besonderer Bedeutung sind (beispielsweise bei "Anrede" der gewünschte Empfänger, bei "Betreff" das allgemeine Thema der Nachricht, bei "Anlage" ein möglicherweise wichtiges Dokument oder bei "cc" die anderen Empfänger der Nachricht, aus deren Zusammensetzung sich ebenfalls Rückschlüsse auf die Wichtigkeit und Relevanz der Nachricht ziehen lassen.

Eine weitere vorteilhafte Variante des erfindungsgemäßen Verfahrens sieht vor, daß bei Zutreffen eines der Zuordnungskriterien die ankommende Email an eine oder mehrere vorbestimmte andere Email-Adresse weitergeleitet wird. Damit können bestimmte wichtige Nachrichten beispielsweise im "Schneeballsystem" effektiv und blitzschnell verbreitet werden.

Besonders günstig ist es auch, wenn bei Zutreffen eines der Such- oder Zuordnungskriterien die ankommende Email mit besonderer Priorität weiterbearbeitet wird. So können insbesondere wichtige Nachrichten ohne Zeitverlust verarbeitet werden, wobei die Relevanz der Nachrichten automatisch und objektiv aufgrund der vorgebbaren Suchparameter maschinell überprüft wird.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: eine erste Ausführungsform der erfindungsgemäßen Vorrichtung in einem Terminal zum Anschluß an ein TK-Netzwerk; und
- Fig. 2: eine schematische Darstellung einer zweiten Ausführungsform der erfindungsgemäßen Vorrichtung in einem Router in einem TK-Netzwerk.

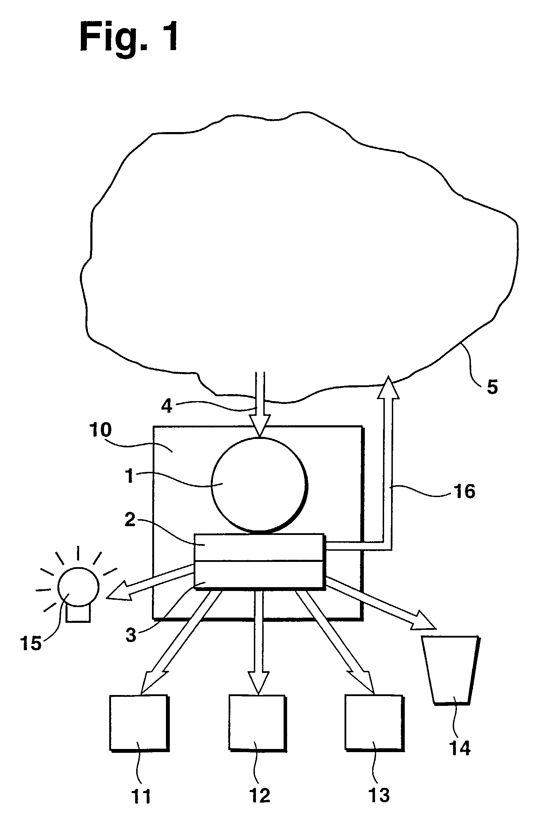

In Fig. 1 ist schematisch ein Datenendgerät (= Terminal) 10 dargestellt, das über eine Empfangseinheit 1 mit einem Telekommunikations (= TK)-Netzwerk 5 in Verbindung steht. Die Empfangseinheit 1 weist Mittel 2 zum Extrahieren von Information aus einer vom TK-Netzwerk 5 ankommenden Email 4 entsprechend vorgebbaren Suchkriterien sowie Mittel 3 zum Zuordnen von ankommender Email 4 zu mindestens einer von mehreren Adressen abhängig von der extrahierten Information sowie von einem oder mehreren vorgebbaren Zuordnungskriterien auf. Die Mittel 2, 3 wirken als automatischer Filter und Verteiler, so daß sämtliche aus dem TK-Netzwerk 5 im Terminal 10 ankommenden Email-Nachrichten sofort vorsortiert werden.

Im gezeigten Beispiel wird die ankommende Email 4 auf Speicherbereiche 11, 12, 13, 14 einer Datenspeichereinheit verteilt, wobei die Speicherbereiche 11, 12, 13 als "elektronischer Ordner" eingereichtet sind, während der Speicherbereich 14 "Papierkorb"-Funktionen für unerwünschte bzw. unwichtige Nachrichten ausübt, die mittels Vergleich von bestimmten Parametern der Email mit einer Negativliste (= black list) herausgefiltert werden können.

Falls die ankommende Email 4 dagegen ganz besonders wichtige Informationen enthält, die mit hoher Priorität weiterverarbeitet werden sollen, was beispielsweise durch Vergleich der extrahierten Information mit einer Positivliste (= white list) festgestellt werden kann, wird eine Signalisierungseinrichtung 15 betätigt, welche optische und akkustische Signalgeber enthalten kann, so daß eine Bedienungsperson auf die emfpangene wichtige Email aufmerksam gemacht wird.

Eine weitere Möglichkeit der Verarbeitung von ankommender Email 4 besteht darin, daß die ankommende Email selbst oder eine aufgrund der Email erstellte Nachricht über den in Fig. 1 schematisch gezeigten Pfad 16 in das TK-Netzwerk 5 eingegeben wird, um beispielsweise gleich automatisch auf die ankommende Email 4 zu reagieren, oder andere Betroffene, für die die in der ankommenden Email 4 enthaltene Information ebenfalls relevant sein könnte, aufmerksam zu machen.

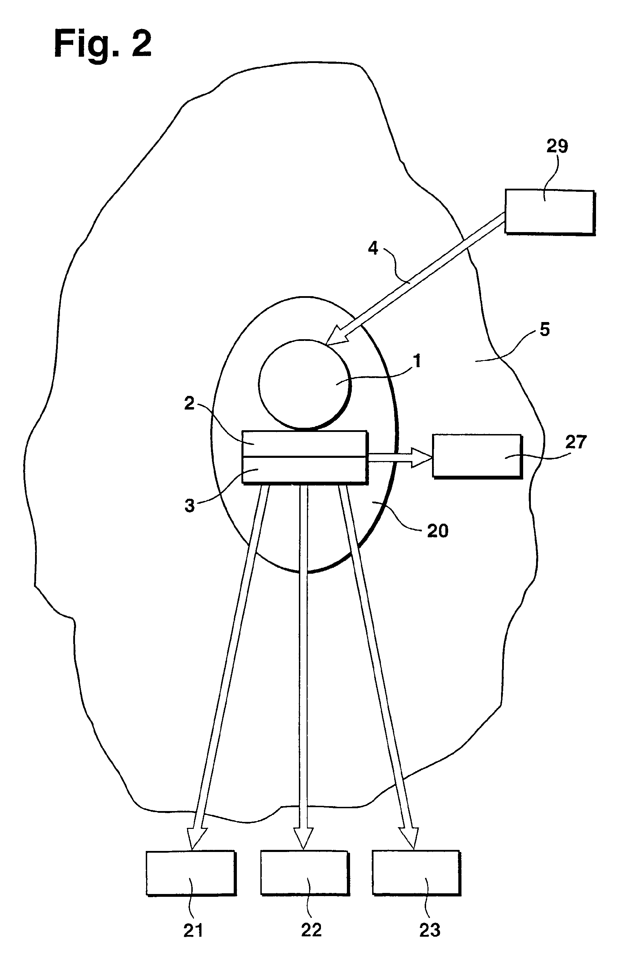

In Fig. 2 ist eine weitere Ausführungsform schematisch dargestellt, bei der die Empfangseinheit 1 mit den Mitteln 2 zum Extrahieren von Information und den Mitteln 3 zum Zuordnen von ankommender Email 4 zu mindestens einer von mehreren Adressen in einem Router 20 innerhalb des TK-Netzwerks 5 angeordnet ist. Auch hier übernehmen die Mittel 2, 3 wiederum eine Filterfunktion für die ankommende Email 4. So kann die von einem Absender 29 in das TK-Netzwerk 5 eingegebene Email 4 beispielsweise an die Adressen von weiteren an dem TK-Netzwerk angeschlossenen Terminals 21, 22, 23 weitergegeben werden. Zusätzlich oder alternativ kann, je nach Voreinstellung der Zuordnungskriterien, die ankommende Email 4 aber auch in einem Speicherbereich 27 innerhalb des TK-Netzwerks 5 abgespeichert bzw. zwischengespeichert werden.

## Patentansprüche

1. Vorrichtung zum Empfangen und/oder Weiterleiten von elektronischer Post (= Email) mit einer Empfangseinheit (1), die ankommende Email-Nachrichten (4) empfangen kann,
dadurch gekennzeichnet,
daß die Empfangseinheit (1) Mittel (2) zum Extrahieren von Information aus der ankommenden Email (4) entsprechend vorgebbaren Suchkriterien und Mittel (3) zum Zuordnen von ankommender Email (4) zu mindestens einer von mehreren Adressen abhängig von der extrahierten Information sowie von einem oder mehreren vorgebbaren Zuordnungskriterien aufweist.

2. Vorrichtung nach Anspruch 1, dadurch gekennzeichnet, daß die Adressen, denen die ankommende Email (4) zugeordnet wird, als elektronische Ordner eingerichtete Speicherbereiche (11, 12, 13, 14) einer Datenspeichereinheit bezeichnen.

3. Vorrichtung nach Anspruch 2, dadurch gekennzeichnet, daß Mittel zum Abspeichern der ankommenden Email (4) in dem bzw. den entsprechenden Ordner(n) vorgesehen sind.

4. Datenendgerät (= Terminal) (10) zum Anschluß an ein Telekommunikations-Netzwerk (5) mit einer Vorrichtung (1) zum Empfangen von elektronischer Post (= Email) nach einem der vorhergehenden Ansprüche.

5. Router (20) zum Anschluß an ein Telekommunikations-Netzwerk (5) mit einer Vorrichtung (1) zum Empfangen und Weiterleiten von elektronischer Post (= Email) nach Anspruch 1.

6. Verfahren zum Empfangen und/oder Weiterleiten von elektronischer Post (=Email)
dadurch gekennzeichnet,
daß bei allen an einer Empfangseinheit (1) ankommenden Email-Nachrichten (4) automatisch entsprechend vorgegebenen Suchkriterien Information extrahiert wird,
daß abhängig von der extrahierten Information sowie vorgegebenen Zuordnungskriterien eine automatische Zuordnung der ankommenden Email (4) zu mindestens einer von mehreren Adressen erfolgt,
und daß die ankommende Email (4) automatisch in einem mit der bzw. den entsprechenden Adresse(n) bezeichneten Speicherbereich (11, 12, 13, 14; 27) abgelegt oder zu der bzw. den Adresse(n) weitergeleitet wird.

7. Verfahren nach Anspruch 6, dadurch gekennzeichnet, daß die Adressen, denen die ankommende Email zugeordnet wird, als elektronische Ordner eingerichtete Speicherbereiche (11, 12, 13, 14) einer Datenspeichereinheit bezeichnen.

8. Verfahren nach Anspruch 6 oder 7, dadurch gekennzeichnet, daß sich zumindest eines der Such- und/oder der Zuordnungskriterien auf absenderspezifische Daten der ankommenden Email (4), insbesondere auf den Namen oder die Email-Adresse des Absenders bezieht.

9. Verfahren nach Anspruch 8, dadurch gekennzeichnet, daß die absenderspezifischen Daten mit einer Negativliste (black list) verglichen werden, und daß die ankommende Email (4) bei einem positiven Ergebnis dieses Vergleichs sofort gelöscht oder ohne weitere Bearbeitung auf einer besonderen Adresse, die insbesondere Papierkorbfunktionen (14) ausübt, abgelegt oder zu dieser weitergeleitet wird.

10. Verfahren nach einem der Ansprüche 6 bis 9, dadurch gekennzeichnet, daß die absenderspezifischen Daten mit einer Positivliste (white list) verglichen werden, und daß die ankommende Email (4) bei einem positiven Ergebnis dieses Vergleichs in Abhängigkeit der Zuordnungskriterien sofort einer weiteren Bearbeitung zugeführt wird.

11. Verfahren nach Anspruch 10, dadurch gekennzeichnet, daß bei positivem Ergebnis des Vergleichs mit der white list eine Sicherungskopie der ankommenden Email (4) parallel zur weiteren Bearbeitung der Email auf einer besonderen Adresse abgelegt oder zu dieser weitergeleitet wird.

12. Verfahren nach Anspruch 10 oder 11, dadurch gekennzeichnet, daß bei positivem Ergebnis des Vergleichs mit der white list eine Signalisierungseinrichtung (15), insbesondere ein optischer und/oder akustischer Signalgeber betätigt wird.

13. Verfahren nach einem der Ansprüche 6 bis 12, dadurch gekennzeichnet, daß sich zumindest eines der Such- und/oder der Zuordnungskriterien auf den Inhalt der ankommenden Email (4), insbesondere auf ein bestimmtes Stichwort bezieht, und daß bei Auffinden dieses Stichworts in der ankommenden Email (4) entweder die Email direkt oder eine Sicherungskopie derselben auf einer bestimmten Adresse abgelegt oder zu dieser weitergeleitet wird.

14. Verfahren nach einem der Ansprüche 6 bis 13, dadurch gekennzeichnet, daß sich zumindest eines der Suchkriterien auf den Dateninhalt an einer bestimmten Position innerhalb der ankommenden Email (4), beispielsweise auf die "Anrede", den "Betreff", die "Anlage" oder "cc" bezieht.

15. Verfahren nach einem der Ansprüche 6 bis 14, dadurch gekennzeichnet, daß bei Zutreffen eines der Zuordnungskriterien die ankommende Email (4) an eine oder mehrere vorbestimmte andere Email-Adressen weitergeleitet wird.

16. Verfahren nach einem der Ansprüche 6 bis 15, dadurch gekennzeichnet, daß bei Zutreffen eines der Such- oder Zuordnungskriterien die ankommende Email (4) mit besonderer Priorität weiterbearbeitet wird.
